(19) 

Europäisches
Patentamt
European
Patent Office
Office européen
des brevets

(11) **EP 2 429 214 A2**

(12) **EUROPEAN PATENT APPLICATION**

(43) Date of publication:
**14.03.2012 Bulletin 2012/11**

(51) Int Cl.:
***H04R 3/00*** $^{(2006.01)}$

(21) Application number: **11450113.3**

(22) Date of filing: **06.09.2011**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **08.09.2010 AT 14942010**

(71) Applicant: **AKG Acoustics GmbH
1230 Wien (AT)**

(72) Inventors:
• **Sontacchi, Alois
  8112 Gratwein (AT)**
• **Freiberger, Karl
  8263 Grosswilfersdorf (AT)**
• **Opitz, Martin
  1190 Wien (AT)**

(74) Representative: **Patentanwälte
Barger, Piso & Partner
Mahlerstrasse 9
1010 Wien (AT)**

(54) **Method for acoustic signal tracking**

(57) The invention concerns a method for determination of the initial position $\Theta$ and acoustic source signal **S** relative to an electroacoustic transducer arrangement with a reference database ***RD*** which has stored reference signals **T** from a measurement process with corresponding **Q** reference positions $\Theta_q$ in the form of angle data and optionally distances of reference signal **T,** in which position determination occurs by comparison of the source signal **S** with the stored reference signals **T.**

The invention is characterized by the fact that reference feature vectors ***RY*** are obtained from the reference signals **T** and feature vectors **Y** from the source signals **S,** and that the feature vectors **Y** are combined through the reference feature vectors ***RY*** to a similarity curve representing the position $\Theta$ and the quality of the source signal **S.**

| **1a** Reference signal **T** (of **Q** known positions) | → | **9a** Transducer input signals $x_{(m)}$ | → | **2a** Reference feature vectors ***RY*** | | |
| | | | | ↓ | | |
| | | | | **6** Similarity curve | → | **8** Position determination $\Theta$ |
| | | | | ↑ | | |
| **1b** Source signal **S** (sent from unknown position) | → | **9b** Transducer input signals $x_{(m)}$ | → | **5** Feature vectors **Y** | | |

**Fig. 1**

Printed by Jouve, 75001 PARIS (FR)

EP 2 429 214 A2

**Description**

The present invention concerns a method for determination of the initial position of an acoustic source signal relative to an electroacoustic transducer arrangement, with a reference database which has stored reference signals from a measurement process with corresponding reference positions in the form of angle data and optionally distances of the reference signal, position determination occurring by comparison of the source signal with the stored reference signals.

One such method is known from WO 2009/062211 A1 and permits position determination of source signals by an arrangement of pressure gradient transducers. This method is based on the use of a reference database which contains the reference signals stored in a measurement process and the corresponding positions in the form of angle data and optionally distances, position determination occurring by comparison of a source signal with the stored reference signals. The drawback here is that no general assertion is made concerning the quality of the signals or the detection quality. This means that in a speech pause, in which no source signal occurs, all the secondary noise and occurring noise function as source signal, and the sought source position is therefore incorrectly detected.

The present invention sets itself the objective of devising a method of the type just mentioned, which is suitable for any type of acoustic signal with occurring noises and transmission pauses of the source signal.

This objective is achieved according to the invention in that in a first step, reference feature vectors are obtained from the reference signals and during position determination in operation of the arrangement, feature vectors are obtained from the source signals, from whose comparison with the reference feature vectors a similarity curve results, which represents both the position and the quality of the source signal.

The advantage of the present invention is that the feature vectors are combined through the reference feature vectors to a similarity curve that represents the position and quality of the source signal.

Additional features and advantages of the invention are apparent from the dependent claims and the following description, which refers to the accompanying drawings. In the drawings:

Fig. 1 shows a flowchart according to the present invention,

Fig. 2 shows the schematic flowchart of the method,

Fig. 3 shows the detailed flowchart for creation of the reference database,

Fig. 4a shows the trend of the components (vectors) of a reference feature vector and

Fig. 4b shows the similarity curve resulting from the reference feature vector from Fig. 4a, based on two different calculation methods,

Fig. 5a shows the trend of a reference feature vector and

Fig. 5b shows the similarity curves from the reference feature vectors of Fig. 5a partly provided with additional noise.

The individual process steps or blocks in the figures are uniformly numbered continuously in the corresponding figures. The essential applied abbreviations denote:

**T**    Reference signal,

**S**    Source signal,

**RY**    Reference feature vectors,

**Y**    Feature vectors,

**RD**    Reference database,

**Q**    Number of positions,

$\Theta_q$    q-th source position,

**M**    Number of microphones,

$\mathbf{x_{(m)}}$     Transducer input signal of channel m,

$\mathbf{H_m}$     Pulse response of channel m (in the frequency range h),

$\mathbf{h_m}$     Amplification factor of the channel m (in the time range),

$\eta$     Noise.

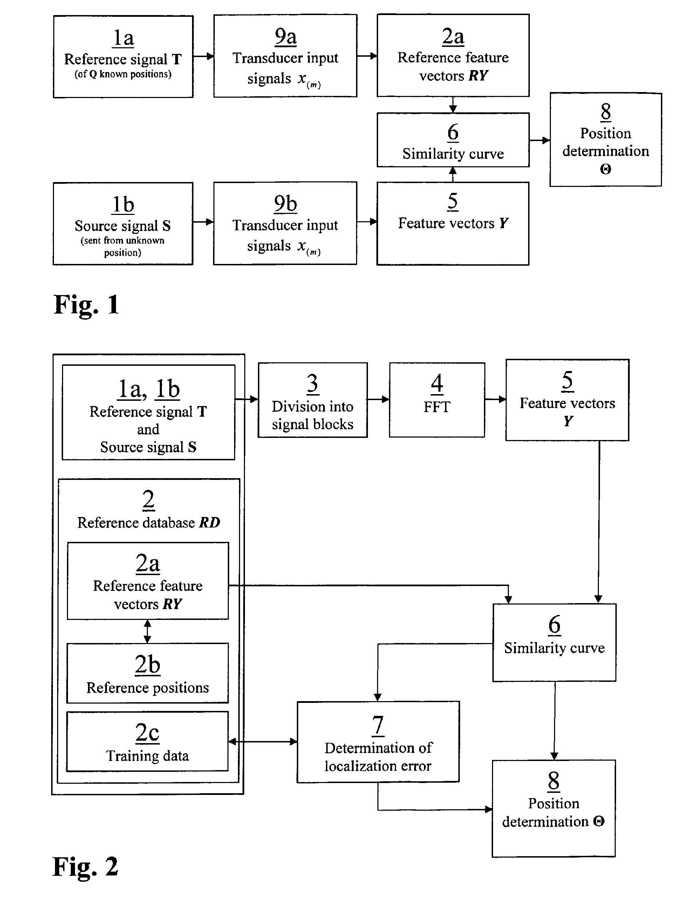

The diagram depicted in Fig. 1 shows the essential process of the present invention. In a first step, the reference signal **T,** sent from a loudspeaker situated at a defined position (block 1a), is recorded by an electroacoustic transducer arrangement. The reference feature vectors **RY** (block 2a) are calculated from these **m** transducer input signals $x_{(m)}$ (block 9a) and stored in a reference database **RD** (block 2 in Fig. 2). This is repeated for all **Q** positions. In later operation, the source signal S (block 1b) is sent from an unknown position and the feature vectors **Y** (block 5) are calculated from the transducer input signals $x_{(m)}$ (block 9b). Each individual feature vector **Y** can therefore be compared with all reference feature vectors **RY,** from which the similarity curve is obtained. A resulting similarity curve (block 8) is determined from these similarity curves, from which the position $\Theta$ is determined.

The flowchart shown in Fig. 2 shows the schematic process of signal processing with intermediate steps. It is apparent that at least two types of information are made available at the transducer input: the acoustic signal (a reference signal **T** (block 1a) and a source signal S (block 1b)). Stating the reference position (block 2b) for the corresponding reference feature vector RY (block 2a) is essential in the reference database **RD** (block 2). The essential process is as follows: at the beginning, the source signal S is divided $x_{l[m]}$ into signal blocks (block 3) by means of a windowing (for example, rectangle, Hanning window) and then transformed by means of Fast Fourier Transformation (FFT) (block 4) into the frequency range $X_l[f] = FFT_N\{x_{l[m]}\}$. The feature vectors **Y** calculated from this (block 5) are then compared with the reference feature vectors **RY** already contained in the reference database **RD,** so that a similarity curve (block 6) is formed for each signal block. A resulting similarity curve is finally determined from these similarity curves. This resulting similarity curve serves to determine the source position $\Theta$ (block 8) by means of the reference positions corresponding to the reference feature vectors **RY.**

If additional true position data are available from a preceding training phase, in addition to the source signals S, it is possible according to the variant shown in Fig. 2 to additionally calculate a localization error (block 7) by means of the training data (block 2c), so that the values in the reference database **RD** are improved, which leads to even more exact position determination.

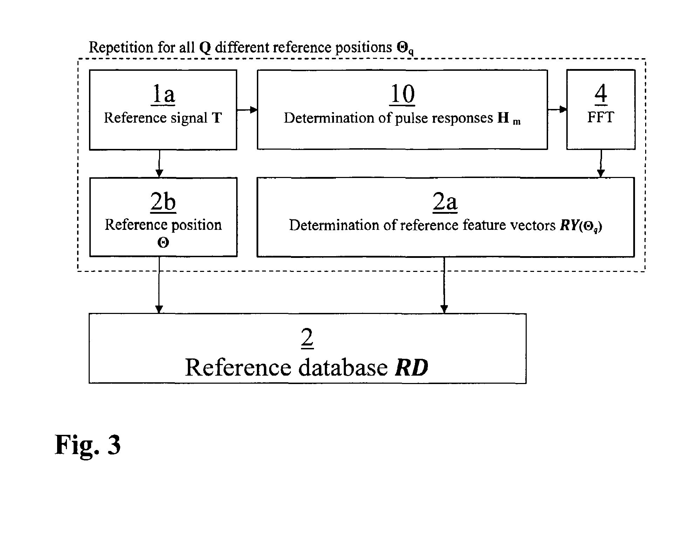

The diagram shown in Fig. 3 shows the detailed process for creation of the reference database **RD** (block 2). For this purpose, a microphone arrangement is prerecorded via a loudspeaker in a position $\Theta$ different from **Q** with the same reference signal T (block 1a). From the obtained input signals, the pulse responses $\mathbf{H_m}$ are determined (block 10) and transformed by means of a Fast Fourier Transform (FFT) (block 4) into the frequency range. The reference feature vectors $\mathbf{RY(\Theta_q)}$ determined from this (block 2a) are stored with the reference positions (block 2b) and the reference database **RD** block (2).

The steps in blocks 10 and 4 can optionally also be replaced by another method for acoustic system identification, for example, by measurement with maximal length sequence (MLS) or time delay spectrometery (TDS).

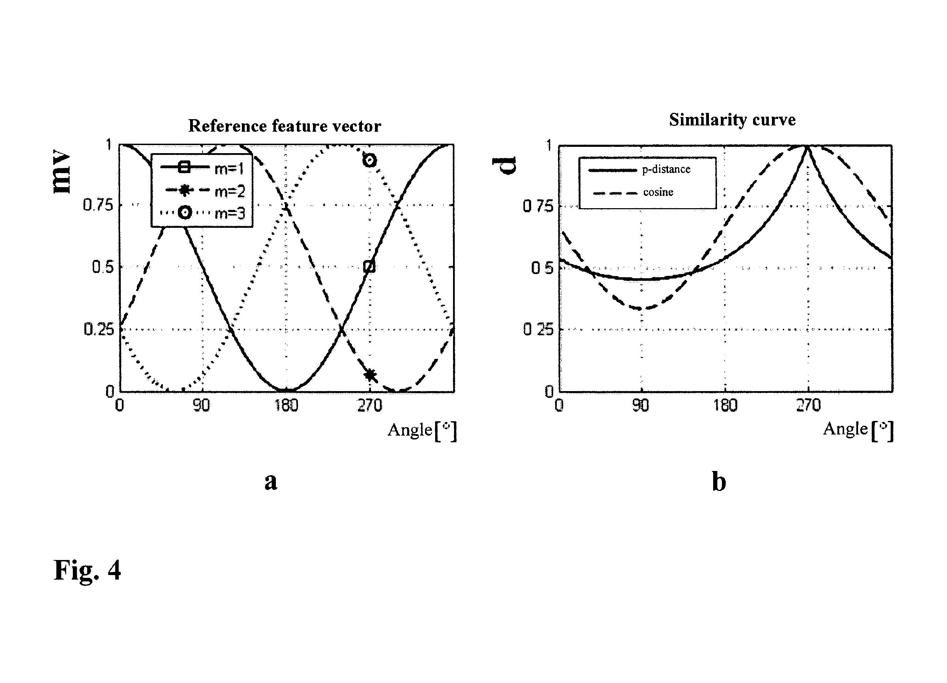

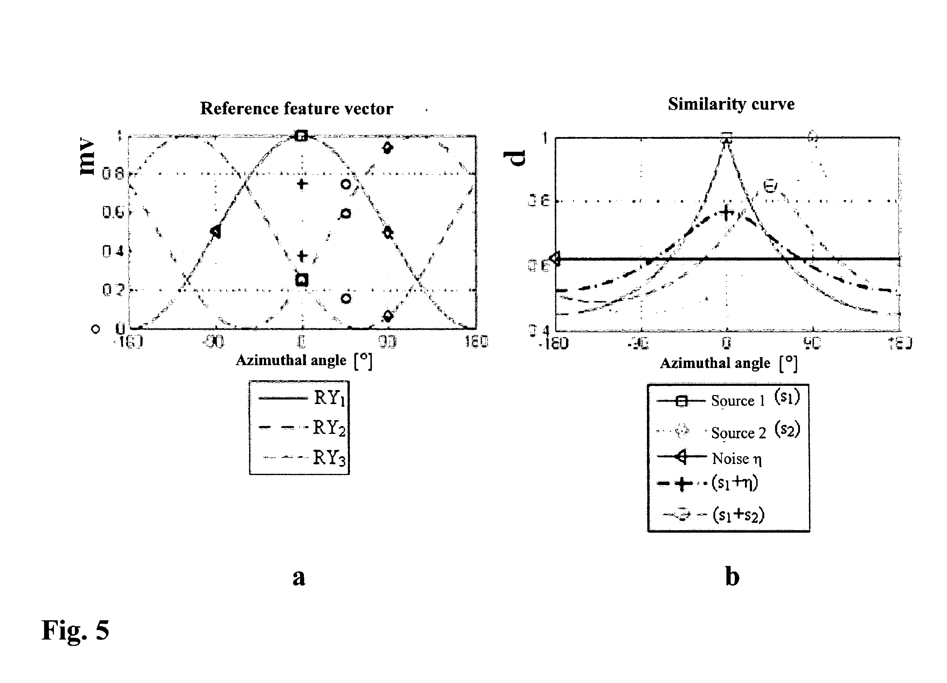

The abscissa in Fig. 4a, Fig. 4b and Fig. 5a, Fig. 5b is the azimuthal angle. The ordinate in Fig. 4a and Fig. 5a is a "feature value" (mv) - standardized sound pressure level, i.e., sound pressure levels normalized to the (cardioid) microphone positions by means of the sound pressure present on the spherical microphone. These values each form the feature vector **Y** over all (cardioid) microphones combined for the corresponding direction. On the other hand, the ordinate in Fig. 4b and Fig. 5b is the similarity (d) between the feature vector **Y** and the reference feature vectors $\mathbf{RY(\Theta_q)}$.

The principle of maximum similarity is shown in Fig. 4. Fig. 4a shows the trend of similarity of three vectors of a reference feature $\mathbf{RY(\Theta_q)}$ (continuous, dashed and dotted), and the values of the feature value **Y** are shown at an azimuthal angle of $\varphi_s = 270°$ in the form of markers (m=1, m=2, m=3). This feature vector Y is compared with the reference feature vector $\mathbf{RY(\Theta_q)}$ in the reference database **RD.** The resulting similarity curve in Fig. 4b from the average of all three similarity curves of the three feature vectors **Y** based on the p-norm (p-distance) and the angle deviation (cosine) is shown with a dashed line.

The trends of a reference feature vector $\mathbf{RY(\Theta_q)}$ (RY1, RY2, RY3) in Fig. 5a are shown with a continuous, dash-dot and dashed line. Different sources ($S_1$, $S_2$) and an omnidirectional noise $\eta$ are shown at an azimuthal angle of $\varphi_s = -90°$ ($\eta$), $\varphi_s = 0°$ ($S_1$, $S_1 + \eta$), $\varphi_s = 45°$ ($S_1 + S_2$), $\varphi_s = 90°$ ($S_2$) in the form of markers. The corresponding similarity curves are shown in Fig. 5b, which are obtained from the differences of the feature vectors **Y** of two different sources ($S_1$, $S_2$) and an omnidirectional noise $\eta$, which are characterized with markers. It is apparent that the similarity curve of the noise $\eta$ has a constant trend and the combinations of several feature vectors $Y(S_1 + S_2)$ and $Y(S_1 + \eta)$ lead to a flattened trend.

The reference signal **T** is characterized by the fact that it contains sufficient energy in the entire reference range, which is considered later for source localization. An exponential sweep (ES) of the function:

$$x(t) = \sin\left[ A\left( e^{\frac{t}{\tau}} - 1 \right) \right], \qquad (1)$$

i.e., a sine tone with exponentially rising frequency, is used as reference signal T with the boundary conditions:

$$\omega_1 = \left. \frac{\partial\left[ A\left( e^{t/\tau} - 1 \right) \right]}{\partial t} \right|_{t=0}, \qquad (3)$$

$$\omega_2 = \left. \frac{\partial\left[ A\left( e^{t/\tau} - 1 \right) \right]}{\partial t} \right|_{t=T}, \qquad (4)$$

$$A = \frac{T \cdot \omega_1}{\ln(\omega_2 / \omega_1)} \text{ and} \qquad (5)$$

$$\tau = \frac{T}{\ln(\omega_2 / \omega_1)} \qquad (6)$$

($\omega_1$... start frequency, ($\omega_2$... end frequency, T... sweep length).

The pulse response $\mathbf{H_m}$ for all $\mathbf{M}$ channels can be obtained by convolution of the sweep response y(t) of the m-th channel with the inverse sweep $x(t)^{-1}$. For this purpose, both the measured sweep response $y(t)$, and also the sweep x(t) are transformed into the frequency domains. Multiplication of the sweep response Y(w) in the frequency domain and the inverse of the sweep $Y(w)^{-1}$ is possible on this account:

$$Y(\omega) = X(\omega) \cdot H(\omega) \Rightarrow H(\omega) = Y(\omega) \cdot X(\omega)^{-1}. \qquad (7)$$

After back transformation of the frequency response into the time domain, the pulse response is obtained:

$$H(t) = IDFT(H(w)) \qquad (8)$$

(IDFT...Inverse Direct Fourier Transformation).

By means of the pulse responses $\mathbf{H_m}$, the behavior of the array for all $\mathbf{Q}$ considered positions and all frequencies can be determined independently of the excitation.

To save memory space and obtain a smooth frequency trend, the obtained pulse responses $\mathbf{H_m}$ are limited and faded in or faded out and, for this purpose, a windowing (for example, rectangle, Hanning window) is conducted.

This means that with the reference signals $\mathbf{T}$ and the layout of the electroacoustic transducer arrangement or its pulse responses $\mathbf{H_m}$, the reference feature vectors $\mathbf{RY}(\Theta_q)$ and, in the same way with the source signals S, the feature vectors $\mathbf{Y}$ are calculated. Depending on the arrangement of the gradient transducers, the reference signals $\mathbf{T}$ are multiplied

by the corresponding direction-dependent amplification factors $\mathbf{h}_{m|\Theta s}$ of the **M** channels of the electroacoustic transducer arrangement, in which case: $\mathbf{h}_{m|\Theta s} = [\mathbf{h}_{0|\Theta s},...,\mathbf{h}_{M-1|\Theta s}]$. In addition, the positioning $\Theta$ of the loudspeaker relative to the electroacoustic transducer arrangement is marked in the reference database *RD* in the form of angle and distance data with the reference feature vectors $\boldsymbol{RY}(\Theta_q)$ for **Q** positions. This process is repeated around the electroacoustic transducer arrangement in, say, 15° steps in **Q** positions (at 15°, it follows that **Q=24),** until the electroacoustic transducer arrangement has received reference signals **T** from all sides, calculates the corresponding reference feature vectors $\boldsymbol{RY}(\Theta_q)$ and the angle and distance data are entered in the reference database *RD.*

The direction to the position of the reference signal **T** is stated by two angles: the azimuthal angle $\varphi$ and the elevation angle $\theta$, in which the azimuthal angle $\varphi$ describes the rotation relative to the reference signal origin $\Theta$ in the horizontal plane and the elevation angle $\theta$ in the vertical plane. The angle origin of the azimuthal angle $\varphi$ depends on the alignment of the transducer arrangement and is stipulated fixed on this account, and the angle origin of the elevation angle $\theta$ is normal to the ground plane.

The reference feature vectors $\boldsymbol{RY}(\Theta_q)$ are calculated from the ratio of absolute frequency response of the cardioid microphone to absolute frequency response of the spherical microphone. With **M-1** cardioid microphones, one therefore obtains for each frequency **M-1** characteristic (i.e., independent of the reference signal **T**) feature values per reference position $\Theta$. The reference database *RD* consists of the **Q** reference positions $\Theta$ and the corresponding **m-1** absolute frequency response ratios.

In the same manner, unknown source signals **S** are recorded by the electroacoustic transducer arrangement and optionally the feature vectors **Y** calculated. The feature vectors Y are then compared with the reference feature vectors $\boldsymbol{RY}(\Theta_q)$ with a minimum distance function (MD), in which case the similarity curve is produced. This procedure is repeated for all feature vectors **Y** and the resulting similarity curve prepared from it, in which case these can be determined from the average or also from the central value.

Each azimuthal angle $\varphi_s$ has **M** (number of microphones) frequency-dependent amplification factors $\mathbf{h}_{m|\Theta s}$, which together produce a vector. This means that if $\mathbf{h}\Theta_s$ is known, the corresponding azimuthal angle $\varphi_s$ is also known. However, in practice, a source position $\Theta_s$ is unknown and therefore also $\mathbf{h}\Theta_s$ [is unknown], [and] only received transducer input signals $\mathbf{X}_m$ are known:

$$\frac{X_m}{T} = \mathbf{h}_{m|\Theta s},\qquad\qquad (9)$$

$$\frac{X_m}{S} = \mathbf{h}_{m|\Theta s}.\qquad\qquad (10)$$

It must be kept in mind that the reference signal **T,** in principle, always exists. As previously explained at length, an exponential sine sweep is used as reference signal **T,** so that this signal is deterministic, analytically describable, and also reproducible. For detection of the source position $\Theta$, the omnidirectional transducer input signal $X_0$ is used, since in a noise-free omnidirectional microphone $h\Theta = 1$ applies, from which it follows: $\mathbf{T} = \mathbf{X_0}$ and $\mathbf{S} = \mathbf{X_0}.$ Under these optimal conditions, the following applies:

$$RY_m = \frac{X_m}{X_0},\qquad\qquad (11)$$

$$Y_m = \frac{X_m}{X_0}.\qquad\qquad (12)$$

Through eq. 11 and eq. 12, the reference feature vector $\boldsymbol{RY}(\Theta_q)$ and the feature vector **Y** for all **m** channels can now be calculated: $\mathbf{Y} = (Y_1,..., Y_{m-1})^T$, in which $Y_0$ is not considered, since $Y_0$ contains no information. The reference feature vector $\boldsymbol{RY}(\Theta_q)$ is also independent of reference signal T, based on eq. 9 and eq. 10:

$$RY_m = \frac{\mathbf{T} \cdot \mathbf{h}_{m|\Theta s}}{\mathbf{T} \cdot \mathbf{h}_{0|\Theta s}} = \frac{\mathbf{h}_{m|\Theta s}}{\mathbf{h}_{0|\Theta s}} . \qquad (13)$$

The feature vectors $\mathbf{Y}$ are determined just like the reference feature vectors $\mathbf{RY}(\Theta_q)$, in which it is noted that the reference feature vectors $\mathbf{RY}(\Theta_q)$ are determined from the stored reference signals $\mathbf{T}$, whereas the feature vectors Y are determined relative to travel time from the source signals S.

The incoming reference signals $\mathbf{T}$ are processed in blocks and each signal block is transformed in the frequency domain by means of Fast Fourier Transform (FFT). Through an appropriate peak value determination (for example, peak picking), an established number $\mathbf{p}$ of at least one peak value is recorded in the corresponding signal block. If such a peak frequency is not contained in the reference database $\mathbf{RD}$, the next frequency available in the reference database $\mathbf{RD}$ is simply chosen.

A method of signal breakdown in the frequency range related to transformations is the band pass filter bank. The classic example of this is the "real-time analyzer", which breaks down a signal with 30 band pass filters with a width of one-third octave, and at comparatively course frequency resolution the time resolution is very good. On the other hand, a digital variant of the filter bank is a cascaded pair of mirror-image complementary FIR filters (finite impulse response filter), low pass and high pass.

For each of the p frequencies, the similarity is now determined for all reference angles, which gives a number of p similarity curves. These are then averaged and produce the average similarity curve, whose maximum lies at the reference position closest to the source position .

More precisely stated, the similarity curve is obtained by comparing the feature vector $\mathbf{Y}$ with the reference feature vectors $\mathbf{RY}(\Theta_q)$ in the reference database $\mathbf{RD}$, which contains $\mathbf{Q}$ positions, in which the p-norm (for p=2, this corresponds to the Euclidean distance function) or also the angle deviation can be used in the same manner.

The similarity $\mathrm{Sim}_p$ based on p-norm reads:

$$\mathbf{Sim_p}\{\boldsymbol{Y}, \boldsymbol{RY}\} = \frac{1}{1 + \|(\boldsymbol{Y} - \boldsymbol{RY})\|_p} . \qquad (14)$$

The similarity $\mathrm{Sim}_{cos}$ based on the angle deviation (cosine function) reads:

$$\mathbf{Sim_{cos}}\{\boldsymbol{Y}, \boldsymbol{RY}\} = \frac{\boldsymbol{Y}^\mathsf{T} \cdot \boldsymbol{RY}}{\|\boldsymbol{Y}\|_2 \cdot \|\boldsymbol{RY}\|_2} . \qquad (15)$$

The similarity between Y and $\mathbf{RY}(\Theta_q)$ is then given by:

$$S(\Theta_q) = \mathbf{Sim}\{\boldsymbol{Y}, \boldsymbol{RY}(\Theta_q)\} . \qquad (16)$$

Eq. 16 is a function based on the reference position $\Theta_q$ in the reference database RD and is designated as a similarity curve, since the minimum distance (MD) corresponds to maximum similarity. The following therefore applies for the source position $\hat{\Theta}_s$:

$$\hat{\Theta}_s = \underset{\Theta_q}{\mathrm{argmax}}\{S(\Theta_q)\} . \qquad (17)$$

The resulting similarity curve then consists of the average of the central value of the individual similarity curves.

In the case of several simultaneously occurring source signals S, the maximum value of the resulting similarity curve depends on how different the azimuthal angles of the source signals S lie. In an extreme case of 180˚ difference, the similarity curve has a trend of omnidirectional noise η.

If distinct direction information is available, the similarity curve is then pronounced correspondingly sharply in this direction - i.e., this direction has a large similarity value, whereas for the other directions correspondingly small values are present. If one calculates for the specific case, then the scatter (variants of the deviations) of the similarity values is large. If, however, the direction is not distinct, almost no differences are present in the similarity curve between the directions, so that the resulting scatter in this case is small.

In order to determine whether the determined detection quality is sufficient for further tracking of the source signal S, a reference variance determined empirically beforehand is used for the calculated scatter. In operation, the resulting variance is then determined from the resulting similarity curve. The resulting variance is then divided by the reference variance determined empirically beforehand, from which it follows:

- If the resulting value QR is close to 0, the previously detected positions are used to determine the actual position Θ of the source signal **S.**
- If the resulting value Wert QR ≤ 1 and QR » 0, a readily locatable source is present and this signal block is used for position determination Θ of source signal **S.**

Determination of the individual limits can be conducted by one skilled in the art by means of some tests.

The actual direction of the source signal S is determined not only by the instantaneously detected similarity curve, but also by the similarity curves detected before it.

If the omnidirectional noise η rises, the occurring signal-noise ratio (SNR) is also much poorer.

A preselection of the input data signal proved to be favorable. For example, if one wishes to locate a speaker, then at least one piece of information as to whether speech is present or not must be present.

To improve the robustness of the direction detection algorithm in noisy environments, the reference curves determined in the ideal, noiseless surroundings are adapted by application of an offset. This means different reference datasets dependent on the signal-noise ratio (SNR) are used, which are artificially generated and/or obtained by corresponding measurements.

The method according to the invention can be formulated as follows:

Method for determination of the initial position Θ of an acoustic source signal S relative to an electroacoustic transducer arrangement, with a reference database **RD** which has stored reference signals **T** from a measurement process with corresponding **Q** reference positions $\Theta_q$ in the form of angle data and optionally distances of the reference signal **T,** in which the position determination occurs by comparison of the source signal **S** with the stored reference signals **T,** in which case reference feature vectors **RY** are obtained from the reference signals **T** and feature vectors **Y** from the source signals S, and that the feature vectors **Y** are combined through the reference feature vectors **RY** to a similarity curve that represents the position Θ and the quality of the source signal **S.**

Method according to the above paragraph, in which the source signal **S** is limited in time by means of windowing.

Method according to at least one of the above paragraphs, in which the source signal **S** is transformed into the frequency range by means of Fast Fourier Transformation (FFT).

Method according to at least one of the above paragraphs, in which the source signal (S) is broken down in the frequency range by means of a band pass filter bank.

Method according to at least one of the above paragraphs, in which the similarity curve is determined from the difference of a feature vector **Y** and at least one reference feature vector **RY**($\Theta_q$) coming from the reference database **RD.**

Method according to at least one of the above paragraphs, in which the similarity between feature vectors **Y** and the reference feature vectors **RY** is established by a distance gauge: **S = Sim{Y, RY} .**

Method according to at least one of the above paragraphs, in which determination of the similarity occurs according to the formulation $\mathbf{Sim_p}\{\boldsymbol{Y},\boldsymbol{RY}\} = \dfrac{1}{1+ \|(\boldsymbol{Y}-\boldsymbol{RY})\|_p}\, .$  .

Method according to at least one of the above paragraphs, in which determination of the similarity occurs according to the formulation $\mathbf{Sim_{cos}}\{\boldsymbol{Y},\boldsymbol{RY}\} = \dfrac{\boldsymbol{Y}^{\top}\cdot\boldsymbol{RY}}{\|\boldsymbol{Y}\|_2 \cdot \|\boldsymbol{RY}\|_2}\, .$

Method according to at least one of the above paragraphs, in which, in the case of several **p** feature vectors **Y**, the resulting similarity curve is formed from the average of the corresponding **p** similarity curve.

Method according to at least one of the above paragraphs, in which, in the case of several feature vectors **Y,** the resulting similarity curve **p** is formed from the central value of the corresponding **p** similarity curves.

Method according to at least one of the above paragraphs, in which the feature vector **Y** that has the smallest difference relative to all reference feature vectors $RY(\Theta_q)$ is used to determine the initial position $\Theta$ of the source signal S.

Method according to at least one of the above paragraphs, in which a preselection of the source signal S occurs.

Method according to at least one of the above paragraphs, in which the actual direction to the initial position $\Theta$ of source signal S is determined by the instantaneously detected direction and the directions detected before it.

Method according to at least one of the above paragraphs, in which the reference feature vectors $RY(\Theta_q)$ are acted upon with reference datasets dependent on signal-noise ratio (SNR).

Method according to at least one of the above paragraphs, in which the reference datasets dependent on signal-noise ratio (SNR) are artificially generated and/or generated by measurements.

**Claims**

1. Method for determination of the initial position ($\Theta$) of an acoustic source signal **(S)** relative to an electroacoustic transducer arrangement, with a reference database **(RD)** which has stored reference signals **(T)** from a measurement process with corresponding **(Q)** reference positions ($\Theta_q$) in the form of angle data and optionally distances of the reference signal **(T),** in which the position determination occurs by comparison of the source signal **(S)** with the stored reference signals **(T), characterized by the fact that** reference feature vectors **(RY)** are obtained from the reference signals **(T)** and feature vectors **(Y)** from the source signals **(S),** and that the feature vectors **(Y)** are combined through the reference feature vectors **(RY)** to a similarity curve that represents the position ($\Theta$) and the quality of the source signal **(S).**

2. Method according to Claim 1, **characterized by** the fact that the source signal **(S)** is limited in time by means of windowing.

3. Method according to Claim 1 or 2, **characterized by** the fact that the source signal (S) is transformed into the frequency range by means of Fast Fourier Transformation (FFT).

4. Method according to one of the Claims 1 to 3, **characterized by** the fact that the source signal **(S)** is broken down in the frequency range by means of a band pass filter bank.

5. Method according to one of the Claims 1 to 4, **characterized by** the fact that the similarity curve is determined from the difference of a feature vector **(Y)** and at least one reference feature vector **(RY($\Theta_q$) )** coming from the reference database **(RD).**

6. Method according to Claim 5, **characterized by** the fact that the similarity between feature vectors **(Y)** and the reference feature vectors **(RY)** is established by a distance gauge: **(S =Sim{Y,RY} ).**

7. Method according to Claim 5 or 6, **characterized by** the fact that determination of the similarity occurs according to the formulation $\left( \mathbf{Sim_p}\{\boldsymbol{Y},\boldsymbol{RY}\} = \dfrac{1}{1 + \| (\boldsymbol{Y} - \boldsymbol{RY}) \|_p} \right).$

8. Method according to Claim 5 or 6, **characterized by** the fact that determination of the similarity occurs according to the formulation $\left( \mathbf{Sim_{cos}}\{\boldsymbol{Y},\boldsymbol{RY}\} = \dfrac{\boldsymbol{Y}^{\mathsf{T}} \cdot \boldsymbol{RY}}{\|\boldsymbol{Y}\|_2 \cdot \|\boldsymbol{RY}\|_2} \right).$

9. Method according to one of the Claims 1 to 8, **characterized by** the fact that in the case of several **(p)** feature vectors **(Y),** the resulting similarity curve is formed from the average of the corresponding **(p)** similarity curves.

10. Method according to one of the Claims 1 to 8, **characterized by** the fact that in the case of several (**p**) feature vectors **(Y),** the resulting similarity curve is formed from the central value of the corresponding (**p**) similarity curves.

**11.** Method according to one of the Claims 1 to 8, **characterized by** the fact that the feature vector **(Y)** that has the smallest difference relative to all reference feature vectors **($RY(\Theta_q)$ )** is used to determine the initial position ($\Theta$) of the source signal (S).

**12.** Method according to one of the Claims 1 to 11, **characterized by** the fact that a preselection of the source signal **(S)** occurs.

**13.** Method according to one of the Claims 1 to 12, **characterized by** the fact that the actual direction to the initial position ($\Theta$) of the source signal **(S)** is determined by the instantaneously detected direction and the directions detected before it.

**14.** Method according to one of the Claims 1 to 13, **characterized by** the fact that the reference feature vectors **($RY(\Theta_q)$ )** are acted upon with reference datasets dependent on signal-noise ratio (SNR).

**15.** Method according to Claim 14, **characterized by** the fact that the reference datasets dependent on signal-noise ratio (SNR) are artificially generated and/or generated by measurements.

| 1a<br>Reference signal T<br>(of Q known positions) | → | 9a<br>Transducer input<br>signals $x_{(m)}$ | → | 2a<br>Reference feature<br>vectors RY |
|---|---|---|---|---|

| | 6<br>Similarity curve | → | 8<br>Position<br>determination<br>Θ |
|---|---|---|---|

| 1b<br>Source signal S<br>(sent from unknown<br>position) | → | 9b<br>Transducer input<br>signals $x_{(m)}$ | → | 5<br>Feature vectors Y |
|---|---|---|---|---|

## Fig. 1

| 1a, 1b<br>Reference signal T<br>and<br>Source signal S | → | 3<br>Division into<br>signal blocks | → | 4<br>FFT | → | 5<br>Feature vectors<br>Y |
|---|---|---|---|---|---|---|

2<br>Reference database RD

2a<br>Reference feature<br>vectors RY

2b<br>Reference positions

2c<br>Training data

6<br>Similarity curve

7<br>Determination of<br>localization error

8<br>Position<br>determination Θ

## Fig. 2

10

Repetition for all **Q** different reference positions $\Theta_q$

| **1a**<br>Reference signal **T** | **10**<br>Determination of pulse responses **H** $_m$ | **4**<br>FFT |

| **2b**<br>Reference position<br>$\Theta$ | **2a**<br>Determination of reference feature vectors $RY(\Theta_q)$ |

**2**<br>Reference database **RD**

# Fig. 3

Fig. 4

EP 2 429 214 A2

**Reference feature vector**

mv

Azimuthal angle [°]

RY₁
RY₂
RY₃

**a**

**Similarity curve**

d

Azimuthal angle [°]

Source 1 $(s_1)$
Source 2 $(s_2)$
Noise η
$(s_1 + \eta)$
$(s_1 + s_2)$

**b**

**Fig. 5**

EP 2 429 214 A2

**REFERENCES CITED IN THE DESCRIPTION**

**Patent documents cited in the description**

- WO 2009062211 A1